Europäisches Patentamt

European Patent Office

Office européen des brevets

(19)

(11) Publication number: **0 271 100 B1**

(12) # EUROPEAN PATENT SPECIFICATION

(45) Date of publication of patent specification: **05.08.92**   (51) Int. Cl.5: **G01N 27/30**

(21) Application number: **87118325.7**

(22) Date of filing: **10.12.87**

(54) **Sheet type electrode.**

(30) Priority: **11.12.86 JP 191497/86 U**

(43) Date of publication of application:
**15.06.88 Bulletin 88/24**

(45) Publication of the grant of the patent:
**05.08.92 Bulletin 92/32**

(84) Designated Contracting States:
**CH DE ES FR GB IT LI NL**

(56) References cited:
**EP-A- 0 061 810**    **EP-A- 0 095 946**
**EP-A- 0 154 147**    **EP-A- 0 164 133**
**EP-A- 0 212 612**    **EP-A- 0 230 472**
**US-A- 4 133 735**

(73) Proprietor: **HORIBA, LTD.**
**2 Miyanohigashi-machi Kissyoin**
**Minami-ku Kyoto(JP)**

(72) Inventor: **Kotani, Haruo**
**45-16, 3-Chome Zushi**
**Takatsuki-city Osaka(JP)**
Inventor: **Tomita, Katsuhiko**
**17 Go, 8 Ban, 2-Chome Kinugawa**
**Ohtsu-city Shiga-prefecture(JP)**

(74) Representative: **TER MEER - MÜLLER - STEIN-**
**MEISTER & PARTNER**
**Mauerkircherstrasse 45**
**W-8000 München 80(DE)**

# Description

The present invention relates to a sheet type electrode for measuring ion-concentrations, such as pH.

## Description of the Prior Art

Recently, an electrode for measuring ion-concentrations, such as pH, having a sheet-like shape has been developed in order to miniaturize the construction of the electrode as the whole, to reduce the costs of production and to improve the operation and maintenance.

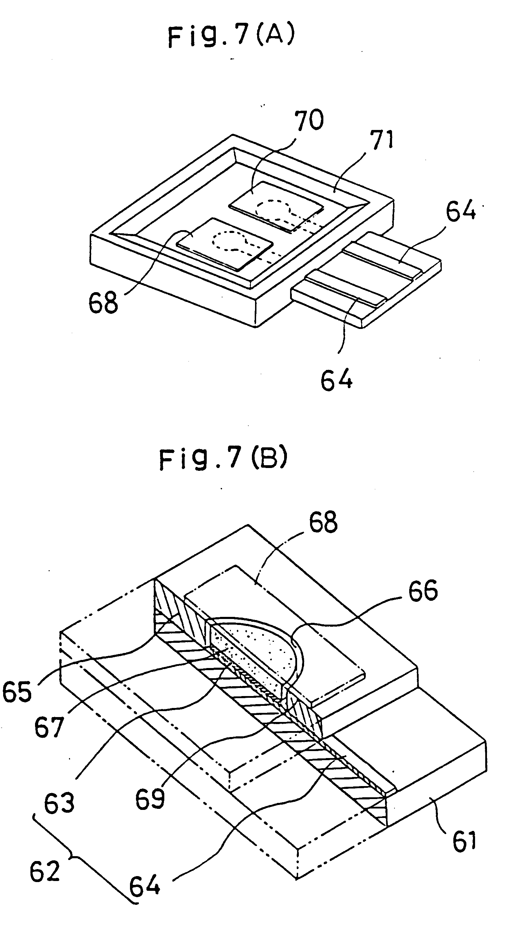

Fig. 7(A) shows the external appearance of a composite sheet type electrode for measuring the pH which is subject of the European Patent Application 87 117 176.5 filed by the present Applicant (Horiba, Ltd.) on November 20, 1987 and Fig. 7(B) shows a section of the measuring electrode of Fig. 7(A). In Figs. 7(A) and 7(B), reference number 61 designates a substrate formed of a material having a sufficiently high electrical insulating property even when it is immersed in a solution containing electrolytes. Reference number 62 designates an electrode formed on the upper surface of said substrate 61, said electrode 62 being formed by carrying out a predetermined pre-treatment and then silk screen printing an Ag paste, so that a part of said electrode 62 is formed as an internal electrode 63 coated with an electrode material, such as for example AgCl, and the remaining part of said electrode 62 is formed as a lead portion 64.

Reference number 65 designates a support layer provided with a through hole 66 at the place corresponding to the internal electrode portion 63 and formed of a material having a sufficiently high electrical insulating property even when it is immersed in a solution containing electrolytes, such as for example polyethylene terephthalate, said support layer 65 being formed on the substrate 61 by exposing the lead wire 64 and its circumference.

A disc type gelatinized internal solution 67 prepared by adding a gelatinizer, such as agar-agar, and a gel-evaporation inhibitor, such as glycerine, to a basic internal solution prepared by adding a phosphoric acid-buffering agent to for example a 3.3 M aqueous solution of KCl supersaturated with AgCl is filled into the through hole 66 by heating under conversion into a paste and then screen printed and the like so that its upper surface may project slightly over the upper surface of the support layer 65 under free conditions and it may overlap the internal electrode portion 63.

Reference number 68 designates a flat plate-like response membrane and its lower surface is in contact with the upper surface of the gelatinized internal solution 67 and the gelatinized internal solution 67 is sealed up in the through hole 66 in that the membrane 68 is fixedly mounted on the support layer 65 along its circumference by the use of an adhesive material 69 (for example organic high molecular adhesives of silicon-, epoxy-, urethane- and the like polymers containing silane coupling agents and the like).

In addition, in Fig. 7(A) reference number 70 designates a liquid junction membrane formed of porous inorganic sintered materials or porous organic high molecular materials impregnated with KCl whose lower surface is in contact with the upper surface of the other gelatinized internal solution and it is adhered to the upper surface of the support layer 65 along its cirucmference. The internal construction of the liquid membrane portion 70 is nearly the same as that of the measuring electrode shown in Fig. 7(B).

Reference number 71 designates a holder portion for the sample solution.

With respect to the above described construction of the measuring electrode, the response membrane 68, the internal electrode portion 63 and the lead portions 64 are all formed on the same surface of the substrate 61, so that the following disadvantages may occur.

The sample solution can run over the holder portion for the sample solution 71 or the sample solution can be inadvertently dropped. As a result, the sample solution sticks to the lead portions 64, whereby a poor insulation of the lead portions 64 occurs. In addition, when the response membrane 68 is permeable to light, a disadvantage is that light coming from outside falls directly upon the internal electrode portion 63, whereby the measurement is influenced by light.

The reference electrode has similar problems.

## SUMMARY OF THE INVENTION

It is the object of the present invention to provide a sheet type electrode for measuring ions wherein the measurement can be carried out accurately without possible problems of a poor insulation and influenceof light.

In order to achieve the above described object, a sheet type electrode for measuring ions according to the present invention has been provided which is characterized by a first support layer 10 of a material having a sufficiently high electrical insulating property provided on the upper surface of the substrate 1 formed of a material having a sufficiently high electrical insulating property, two pairs of electrodes 2A,2B,3A,3B provided with internal electrode portions 6A,6B and lead portions 4A,4B,5A,5B adhered to the lower surface of said substrate, and a second support layer 14 of a material having a sufficiently high electrical insulating property provided on said lower surface of the substrate, the lead portions being exposed.

In the present invention a selective ion-response membrane or a liquid junction portion contacting a sample solution on the upper surface side of a substrate formed of a material having a sufficiently high electrical insulating property and an internal electrode portion and lead portions are formed on the lower surface side of the substrate, so that insulating characteristics of said substrate can be sufficiently utilized and a poor insulation in the lead portions due to an upset and the like can be prevented.

In addition, even when for example an ion-response membrane of a measuring electrode is permeable to a light, the outside light is cut off by the substrate, so that the light can be prevented to fall directly upon the internal electrode portion.

## BRIEF DESCRIPTION OF THE DRAWINGS

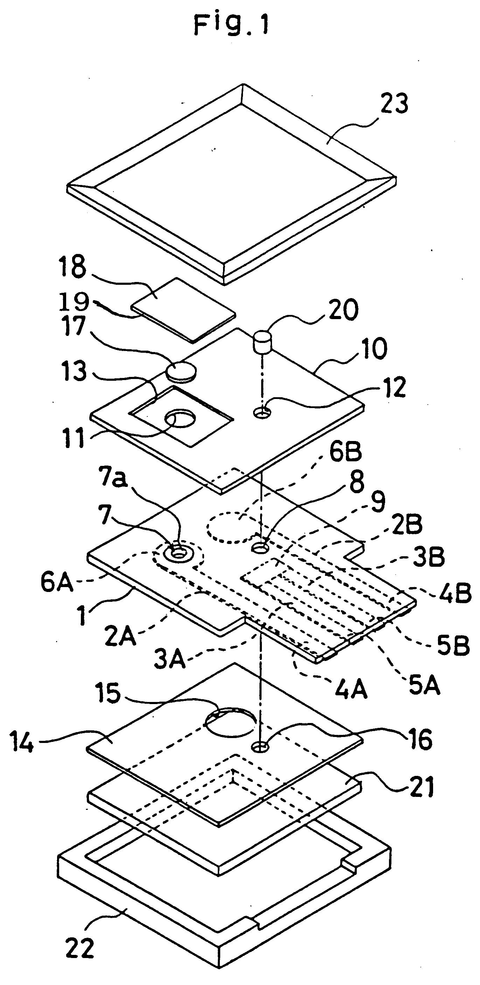

The preferred embodiments are shown in Figs. 1 to 4.

**Fig. 1**
shows a disintegrated perspective view of a sheet type electrode for measuring the pH according to the invention;

**Fig. 2**
shows a perspective view of the external appearance of the sheet type electrode of Fig. 1;

**Fig. 3**
shows a partially developed sectional view;

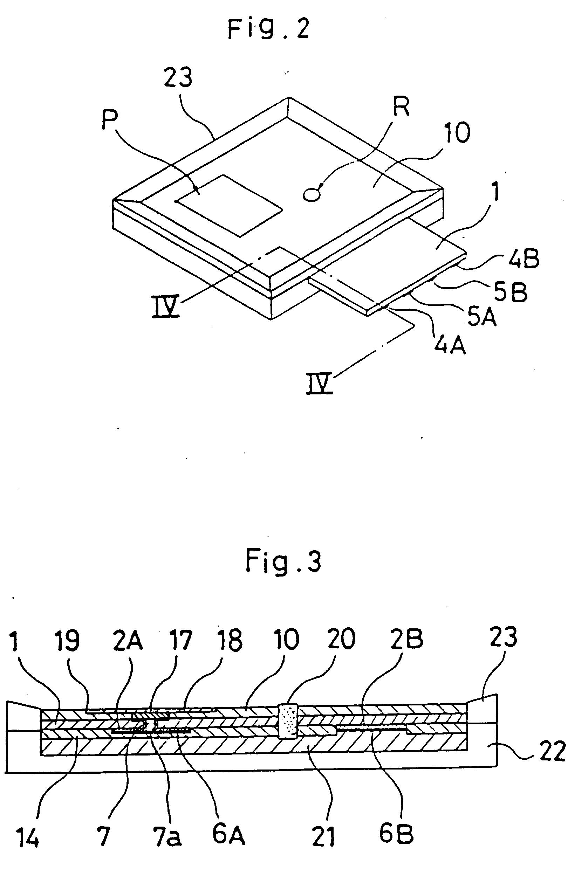

**Fig. 4**
shows a sectional view of Fig. 2 taken along the line IV-IV thereof;

**Fig. 5**
shows a sectional view of another preferred embodiment of the present invention;

**Fig. 6**
shows a partially broken perspective view of a further preferred embodiment of the present invention and

**Fig. 7(A) and Fig. 7(B)**
show a perspective view of a prior art sheet type electrode.

## DESCRIPTION OF THE PREFERRED EMBODIMENTS

The preferred embodiments of the present invention are described below with reference to the drawings.

A sheet type composite electrode for measuring the pH is described.

In Figs. 1 to 4, reference number 1 designates a substrate formed of a material having a sufficiently high electrical insulating property even when it is immersed in a solution containing electrolytes, such as organic high molecular materials, such as polyethylene, polypropylene, polyethylene terephthalate, acryl and polyfluoroethylene or inorganic materials, such as silica glass and pyrex (in the preferred embodiment it is a polyethylene terephthalate plate).

Two pairs (an inside pair and an outside pair) of electrodes 2A,2B,3A,3B are adhesively formed on the lower surface of the substrate 1 by providing a metal selected from the group consisting of electrically conductive Ag, Cu, Au, Pt and the like and alloys thereof, a paste containing said metal or a semiconductor, such as $IrO_2$ and $SnO_2$, on the lower surface of substrate 1 by physical plating methods, such as vacuum vapor deposition and CVD, chemical plating methods, such as electrolysis method and non-electrolysis method, or printing methods, such as the silk screen method, anastatic printing method and flat plate method (in this preferred embodiment the lower surface of substrate 1 is subjected to a grafting process and an anchoring process with a silane coupling agent and the like, and then an Ag paste is formed by silk screen printing).

A base end portion positioned at one end edge portion of the substrate 1 of each electrode 2A,2B,3A,3B is formed as a lead portion 4A,4B,5A,5B while the other nearly circular pointed end portions of the outside pair of electrodes 2A,2B positioned approximately near the central portion of the substrate 1 are formed as internal electrode portions 6A,6B, coated with an electrode material, such as AgCl, (by physical plating methods, chemical plating methods or printing methods in the same manner as mentioned above). One internal electrode portion 6A (pH-measuring electrode side P) is provided with a through hole 7, the internal surface of which was subjected to an electrically conducting treatment by forming an electrode through hole at the nearly central portion thereof while the other internal electrode portion 6B (reference electrode side R), is provided with a through hole 8 formed adjacent thereto. Reference number 7a designates the electrically conductive portion in the through hole 7. In addition, a temperature compensating electrode portion 9, such as a thermistor, is formed between the other pointed end portions positioned at the approximately central portion of the substrate 1 of the inside pair of electrodes 3A,3B.

Reference number 10 designates a first support layer formed on the upper surface of the substrate 1 which is formed of a material having a sufficiently high insulating property (in this preferred embodiment it is a polyethylene terephthalate layer) in the same manner as substrate 1 and provided with the through holes 11, 12 formed at those places corresponding to the through hole 7 passing through the internal electrode portion 6A formed in the substrate 1 and the through hole 8 formed adjacent to the other internal electrode portion 6B, respectively. A concaved portion 13 having a predetermined size is formed in the upper surface side of the support layer 10 having included said through hole 11.

Said first support layer 10 is formed by the screen printing method or the heat melt method wherein adhesives capable of securing a sufficiently high electrical insulating property (for example 10 MΩ or more) such as polyolefine polymers, silicon resins and the like. In addition, the upper surface of the support layer 10 is subjected to the grafting process and the anchoring process with a silane coupling agent and the like.

Reference number 14 designates a second support layer formed on the lower surface of the substrate 1 which is formed of a material having a sufficiently high electrical insulating property (in this preferred embodiment it is a polyethylene terephthalate layer) in the same manner as substrate 1 and the first support layer 10 and provided with through holes 15, 16 formed at those places corresponding to the internal electrode portion 6B and the through hole 8 formed in the substrate 1, respectively. This second support layer 14 is formed according to the same method as the first support layer 10.

Reference number 17 designates a gelatinized internal solution filled in through hole 11 of the support layer 10 which is obtained by adding a gelatinizer (such as agar-agar, gelatine, glue, alginic acid and various kinds of hygroscopic acrylic polymers) and a gel-evaporation inhibitor (such as glycerine and ethylene glycol) to a basic internal solution comprising a 3.3 M aqueous solution of KCl supersaturated with AgCl containing a phosphoric acid-buffer solution and molding the resulting mixture into a disc-like shape.

This gelatinized internal solution 17 is charged into the through hole 11 by for example heating under conversion into a paste and then printing the paste by the screen printing method so that the upper surface thereof may slightly project over the upper surface of the first support layer 10 under free conditions. Said internal solution 17 is sealed up tightly in the through hole 11 and connected to the internal electrode portion 6A through the electrically conductive portion of the through hole 7 by providing a flat plate-like selective ion-response membrane 18 having a predetermined size as such that its lower surface may be closely brought into contact with the upper surface thereof.

Reference number 19 designates an adhesive having a sufficiently high electrical insulating property for fixedly mounting the response membrane 18 on the first support layer 10 along the circumference thereof. The adhesives include high molecular adhesives of silicone polymers, epoxy polymers, urethane polymers and the like containing silane coupling agents and the like.

Reference number 20 designates a gel-impregnated hydrophilic high molecular porous material having a suitable size to pass through the through holes 12, 8, 16 formed at those places corresponding to the first support layer 10, the substrate 1 and the second support layer 14, respectively. Said gel-impregnated hydrophilic high molecular porous material 20 is obtained by impregnating a hydrophilic high molecular porous substance, which is obtained by sintering a chemically stabilized hydrophilic high molecular particle material, such as a sintered body of high olefine polymer powdery materials having a mechanical strength of the same degree as that of polyolefines and by carrying out a denaturation treatment (for example Sunfine AQ® manufactured by Asahi Kasei Co., Ltd.) to provide hydrophilic properties. Furtheron, the material 20 is impregnated with a gelatinized composite such as U-jelly® manufactured by Showa Denki Co., Ltd. which is a water-contained jelly mainly comprising a sodium salt of acrylic polymer without drying out, i.e. depositing KCl and losing the wetness from the surface of the proous substance even when it is left unattended in the air. The gel-impregnated hydrophilic high molecular porous substance 20 is charged in that way that it slightly projects over the surface of the first support layer 10 and serves as a liquid junction portion of the reference electrode.

Reference number 21 designates a gelatinized internal solution having the same chemical composition as the above described gelatinized internal solution 17 which is in contact with not only the internal electrode portion 6B through the through hole 15 but also with the gelatinized hydrophilic high molecular porous substance 20.

Reference numeral 22 designates a bottom case. Reference numeral 23 designates a holder for the solution to be tested provided around the first support layer 10.

In the above described construction, the selective ion-response membrane 18 provided on the upper surface of the first support layer 14, formed of a material having a sufficiently high electrical insulating property and contacted with the sample solution is connected with the internal electrode portion 6A formed on the lower surface of the substrate 1 through the gelatinized internal solution 17 and the electrically conductive portion 7a of the through hole 7 formed in the substrate 1 while the gel-impregnated hydrophilic high molecular porous sub stance 20 provided on the upper surface side of the first support layer 14 formed of a material having a sufficiently high electrical insulating property is similarly connected with the internal electrode portion 6B formed on the lower surface side of the substrate 1 through the gelatinized internal solution 21, whereby the measurement of pH can be carried out according to the invention.

In this case, the substrate 1 is provided with the internal electrode portions 6A,6B and the lead portions 4A,4B,5A,5B formed on the lower surface side thereof, so that the above described insulation characteristics of the substrate 1 can be sufficiently utilized and a poor insulation in the lead portions 4A,4B, 5A,5B due to problems during the operation and the like can be prevented.

In addition, even though the selective ion-response membrane 18 is optically transparent, the outside light is cut off by the substrate 1, so that the light does not fall directly upon the internal electrode portion 6A, so that an accurate measurement can be obtained.

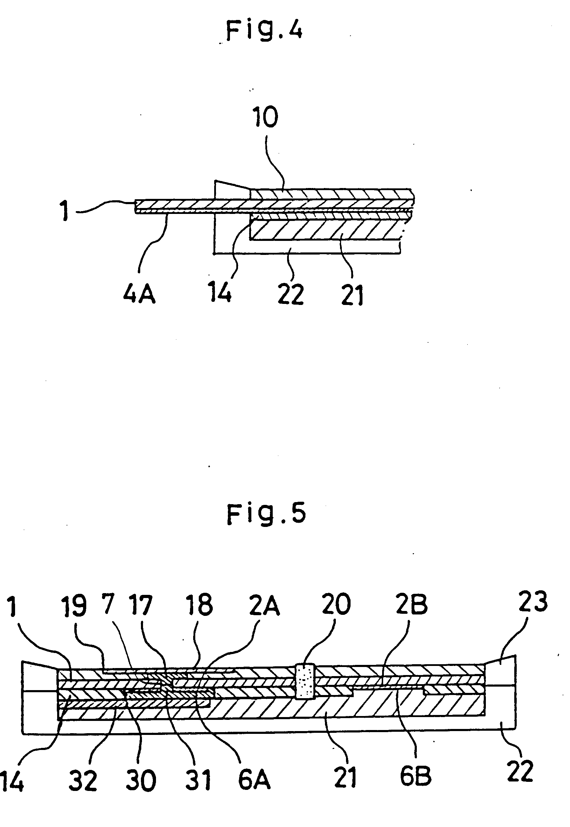

Although in the above described preferred embodiment the electrically conductive portion 7a is formed in the through hole 7 provided in the substrate 1, a through hole 30 may be formed at a position corresponding to the internal electrode portion 6A in the second support layer 14 to communicate with the through hole 7 to be filled with a gelatinized internal solution 31 having the same composition as the gelatinized internal solution 17, as shown in Fig. 5. In Fig. 5, reference number 32 designates a third support layer for dividing the gelatinized internal solution 21 from the gelatinized internal solution 31 so that they cannot be brought into contact with each other. Said third support layer is formed in the same manner as the first support layer 10 and the second support layer 14.

In the above described construction, the selective ion-response membrane 18 provided on the upper surface side of the support layer 10 is connected with the internal electrode portion 6A provided on the lower surface side of the substrate 1 through the gelatinized internal solution 17 and the gelatinized internal solution 31.

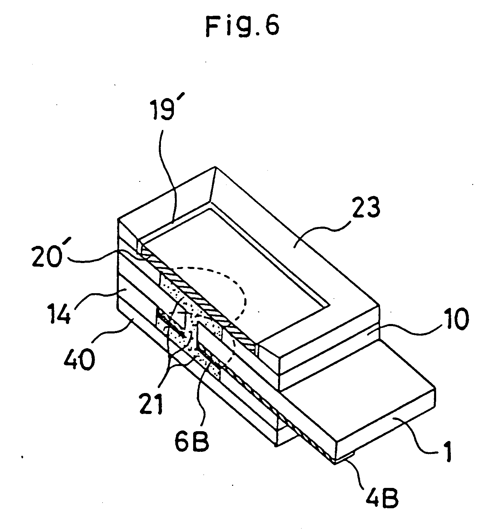

In addition, a reference electrode having a construction as shown in Fig. 6 may be used. In Fig. 6, reference number 20' designates a liquid junction membrane formed of an inorganic sintered porous substance or an organic high molecular porous substance impregnated with KCl provided on the first support layer 10 and surrounded by the sample-solution holder 23 through an adhesive material 19' having a high electrical insulating property along the circumference thereof so that its lower surface may be contacted to the upper surface of the gelatinized internal solution 21. In addition, reference number 40 designates a third support layer formed of for example the same material as the first support layer 10. Besides, the same constituent members in Fig. 6 as in Fig. 1 are designated by the same reference number as in Fig. 1.

The present invention can be applied to various kinds of measuring electrodes (glass electrodes) and reference electrodes as well as to composite electrodes for the use in the measurement with both electrodes in combination in addition to the above described sheet type measuring electrode for the use in the measurement of pH.

As above described, a sheet type electrode for measuring the of pH according to the present invention comprises a first support layer formed of a material having a sufficiently high electrical insulating property which is provided on the upper surface of a substrate formed of a material having a sufficiently high electrical insulating property, an electrode provided with internal electrode portions and lead portions being adhered to the lower surface of said substrate, and a second support layer formed of a material having a sufficiently high electrical insulating property which is provided on the lower surface of said substrate under the condition that said lead portions are exposed, so that a poor insulation due to an upset and the like can be prevented and an accurate measurement can be obtained without the influence of light.

## Claims

1. A sheet type electrode comprising a substrate, a support layer and an electrode comprising an internal electrode portion and a lead portion, **characterized by** a first support layer (1) formed of a material having a sufficiently high electrical insulating property provided on the upper surface of a substrate (1) formed of a material having a sufficiently high electrical insulating property, two pairs of electrodes (2A,2B,3A,3B) provided with internal electrode portions (6A,6B) and lead portions (4A,4B,5A,5B) adhered to the lower surface of said substrate, and a second support layer (14) formed of a material having a sufficiently high electrical insulating property provided on said lower surface of the substrate, the lead portions being exposed.

2. A sheet type electrode according to claim 1, **characterized in that** one internal electrode portion (6A) is provided with a through hole (7), having an electrically conductive portion (7a) therein and the other internal electrode portion (6B) is provided with a through hole (8) adjacent thereto.

3. The sheet type electrode according to claim 1, **characterized in that** the first support layer (10) is provided with through holes (11,12) and the second support layer (14) is provided with through holes (15,16).

4. The sheet type electrode according to claim 3, **characterized in that** the through hole (11) is filled with a gelatinized internal solution (17).

5. The sheet type electrode according to claims 1 to 4, **characterized in that** a selective ion-response membrane (18) provided on the upper surface of the first support layer (14) is connected with the internal electrode portion (6A) formed on the lower surface of the substrate (1) through the gelatinized internal solution (17) and the electrically conductive portion (7a) of the through hole (7) formed in substrate (1).

6. The sheet type electrode according to claims 1 to 3, **characterized in that** a gel-impregnated hydrophilic high molecular porous substance (20) having a suitable size is formed through the through holes (12,8,16).

7. The sheet type electrode according to claims 1 to 6, **characterized in that** the gel-impregnated hydrophilic high molecular porous substance (20) provided on the upper surface of the first support layer (14) is connected with the internal electrode portion (6B) formed on the lower surface side of substrate (1) through a gelatinized internal solution (21).

**Revendications**

1. Electrode en feuillet comprenant un substrat, une couche de support et une électrode comprenant une partie d'électrode interne et une partie de conducteur, caractérisée par une première couche de support (10) formée d'un matériau possédant une qualité d'isolant électrique suffisamment élevée prévue sur la face supérieure d'un substrat (1) formé d'un matériau possédant une qualité d'isolant électrique suffisamment élevée, deux paires d'électrodes (2A, 2B, 3A, 3B) munies de parties d'électrode internes (6A, 6B) et de parties de conducteurs (4A, 4B, 5A, 5B) fixées à la face inférieure dudit substrat, et une deuxième de couche de support (14) formée d'un matériau possédant une qualité d'isolant électrique suffisamment élevée prévue sur ladite face inférieure du substrat, les parties de conducteur étant mises à nu.

2. Electrode en feuillet suivant la revendication 1, caractérisée en ce qu'une partie (6A) d'électrode interne est pourvue d'une perforation (7), ayant une partie (7a) électriquement conductrice à l'intérieur et l'autre partie d'électrode interne (6B) est pourvue d'une perforation (8) adjacente à celle-ci.

3. Electrode en feuillet suivant la revendication 1, caractérisée en ce que la première couche de support (10) est pourvue de perforations (11, 12) et la deuxième couche de support (14) est pourvue de perforations (15, 16).

4. Electrode en feuillet suivant la revendication 1, caractérisée en ce que la perforation (11) est remplie d'une solution interne (17) rendue gélatineuse.

5. Electrode en feuillet suivant les revendications 1 à 4, caractérisée en ce qu'une membrane de réponse (18) ionique sélective prévue sur la face supérieure de la première couche de support (14) est reliée à la partie (6A) d'électrode interne formée sur la face inférieure du substrat (1) à travers la solution interne (17) rendue gélatineuse et la partie électriquement conductrice (7a) de la perforation (7) formée dans le substrat (1).

6. Electrode en feuillet suivant les revendications 1 à 3, caractérisée en ce qu'une substance poreuse (20) de poids moléculaire élevé, hydrophile et imprégnée de gel ayant une dimension adéquate est formée à travers les perforations (12,8,16).

7. Electrode en feuillet suivant les revendications 1 à 6, caractérisée en ce que la substance poreuse (20) de poids moléculaire élevé, hydrophile et imprégnée de gel fournie sur la face supérieure de la couche de support (14) est reliée à la partie (6B) d'électrode interne formée sue le côté de la face inférieure du substrat (1) à travers une solution interne (21) rendue gélatineuse.

**Patentansprüche**

1. Blattähnliche Elektrode, umfassend ein Substrat, eine Trägerschicht und eine einen inneren Elektrodenbereich und einen Leitungsbereich umfassende Elektrode, **gekennzeichnet durch** eine erste, aus einem Material mit einer ausreichend hohen elektrischen Isolierfähigkeit gebildeten Trägerschicht (10), die auf der oberen Fläche eines aus einem Material mit ausreichend hoher Isolierfähigkeit gebildeten Substrats (1) vorgesehen ist, zwei Paare von Elektroden (2A, 2B, 3A, 3B), die mit inneren Elektrodenbereichen (6A, 6B) und Leitungsbereichen (4A, 4B, 5A, 5B), welche an der unteren Fläche des Substrats anhaften, versehen sind, sowie eine zweite, aus einem Material mit ausreichend hoher elektrischer Isolierfähigkeit gebildete Trägerschicht (14), die auf der unteren Fläche des Substrats vorgesehen ist, wobei die Leitungsbereiche freiliegen.

2.    Blattähnliche Elektrode nach Anspruch 1, **dadurch gekennzeichnet,** daß ein innerer Elektrodenbereich (6A) mit einer durchgehenden Öffnung (7) versehen ist, die darin einen elektrisch leitfähigen Bereich (7a) besitzt, und daß der andere innere Elektrodenbereich (6B) mit einer dazu benachbarten durchgehenden Öffnung (8) versehen ist.

3.    Blattähnliche Elektrode nach Anspruch 1, **dadurch gekennzeichnet,** daß die erste Trägerschicht (10) mit durchgehenden Öffnungen (11, 12) und die zweite Trägerschicht (14) mit durchgehenden Öffnungen (15, 16) versehen sind.

4.    Blattähnliche Elektrode nach Anspruch 3, **dadurch gekennzeichnet,** daß die durchgehende Öffnung (11) mit einer gelierten Innenlösung (17) gefüllt ist.

5.    Blattähnliche Elektrode nach den Ansprüchen 1 bis 4, **dadurch gekennzeichnet,** daß eine auf der oberen Fläche der ersten Trägerschicht (14) vorgesehene selektive Ionenansprech-Membran (18) mit dem auf der unteren Fläche des Substrats (1) gebildeten, inneren Elektrodenbereich (6A) durch die gelierte Innenlösung (17) und dem elektrisch leitfähigen Bereich (7a) der in dem Substrat (1) gebildeten, durchgehenden Öffnung (7) verbunden ist.

6.    Blattähnliche Elektrode nach den Ansprüchen 1 bis 3, **dadurch gekennzeichnet,** daß eine gelimprägnierte hydrophile hochmolekulare poröse Substanz (20) einer geeigneten Größe durch die durchgehenden Öffnungen (12, 8, 16) hindurch ausgebildet ist.

7.    Blattähnliche Elektrode nach den Ansprüchen 1 bis 6, **dadurch gekennzeichnet,** daß die auf der oberen Fläche der ersten Trägerschicht (14) vorgesehene, gelimprägnierte hydrophile hochmolekulare poröse Substanz (20) mit dem auf der unteren Flächenseite des Substrats (1) gebildeten, inneren Elektrodenbereich (6B) durch eine gelierte Innenlösung (21) verbunden ist.

# Fig.1

Fig. 2

Fig. 3

Fig.4

Fig.5

# Fig.6

# Fig.7(A)

# Fig.7(B)